# EUROPÄISCHE PATENTSCHRIFT

(11) **EP 3 764 210 B1**
(45) Veröffentlichungstag und Bekanntmachung des Hinweises auf die Patenterteilung: **19.11.2025**
(21) Anmeldenummer: 19184906.6
(22) Anmeldetag: 08.07.2019
(51) Int. Cl.: G06F 3/0481, G06F 9/451

(54) **DARSTELLEN VON ANZEIGEBEREICHEN AUF EINEM DESKTOP**
DISPLAY OF DISPLAY AREAS ON A DESKTOP
REPRÉSENTATION DE ZONES D'AFFICHAGE SUR UN BUREAU

(43) Veröffentlichungstag der Anmeldung: 13.01.2021
(73) Patentinhaber: dSPACE GmbH, 33102 Paderborn (DE)
(72) Erfinder: Gretenkord, Jörg, 33102 Paderborn (DE)

(56) Entgegenhaltungen:
- WO-A1-01/95041
- DE-T2- 69 220 583

## Beschreibung

Die Erfindung betrifft ein Verfahren zum Darstellen von Anzeigebereichen auf einem Desktop mit folgenden Verfahrensschritten:
- Empfangen von Daten zum Erstellen und Anzeigen eines fensterbehafteten Anzeigebereichs,
- Erstellen des fensterbehafteten Anzeigebereichs auf der Grundlage der dafür empfangenen Daten unter Zuordnung eines eindeutigen Window Handles aus einer vorbestimmten Gruppe von Window Handles und eines eindeutigen, von den Window Handles verschiedenen Anzeigenidentifizierers,
- Abspeichern der Zuordnung des Anzeigenidentifizierers des fensterbehafteten Anzeigebereichs zu dem fensterbehafteten Anzeigebereich,
- Abspeichern des Anzeigenidentifizierers des fensterbehafteten Anzeigebereichs an einer vorbestimmten Stelle in einer hierarchischen Liste,
- Anzeigen des fensterbehafteten Anzeigenbereichs auf dem Desktop,
- Empfangen von Daten zum Erstellen und Anzeigen eines fensterlosen Anzeigebereichs,
- Erstellen des fensterlosen Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des fensterlosen Anzeigebereichs zu dem fensterlosen Anzeigebereich,
- Abspeichern des Anzeigenidentifizierers des fensterlosen Anzeigebereichs an einer vorbestimmten Stelle in der hierarchischen Liste,
- Anzeigen des fensterlosen Anzeigenbereichs auf dem Desktop.

Als "Desktop" wird im Bereich der EDV die unterste, hinterste bzw. letzte Ebene des gesamten Anzeigebereichs grafischer Benutzeroberflächen bezeichnet. Auf ihm liegen geschlossene Dokumente in Form von Dateien und geöffneten Dokumente, typischerweise in Fenstern. Sofern im Deutschen nicht der Begriff "Desktop" verwendet wird, sind übliche Synonyme "Schreibtisch" oder "Arbeitsfläche".

Betriebssysteme, wie Microsoft Windows, müssen über Mittel verfügen, um Zugang zu Betriebssystemfunktionen und unter diesen Betriebssystemen laufende Anwendungen zu erhalten. Diese Mittel machen das Betriebssystem und seine Anwendungen zugänglich und nutzbar, z.B. durch Ansteuern eines auf einem Desktop angezeigten Anzeigebereichs, z.B. in einem Fenster. Um ein solches Fenster ansteuern bzw. Informationen zu dem Fenster abrufen zu können, muss das Fenster mit einer eindeutigen Kennung versehen sein. Diese eindeutige Kennung wir im Allgemeinen "Window Handle" bezeichnet. Die maximale Anzahl von Window Handles ist, abhängig vom jeweiligen Betriebssystem, begrenzt.

Bei Anwendungen, die sehr viele verschiedene Anzeigebereiche und damit sehr viele Fenster erfordern, kann es daher beim Überschreiten der maximalen Anzahl von zulässigen Window Handles zu einem Absturz des Betriebssystems kommen oder zumindest dazu, dass keine neuen Fenster und damit keine neuen Anzeigebereiche mehr generiert werden können, so dass den Anforderungen der Anwendung ggf. nicht mehr entsprochen werden kann. Eine solche Problematik stellt sich z.B. bei der Anzeige von Messdateninstrumenten für Echtzeit-Messdaten bei Hardware-in-the-Loop Anwendungen. Hier ist es mitunter erforderlich, eine große Anzahl von verschiedenen Anzeigebereichen darzustellen oder zumindest vorzuhalten. In der Praxis hat sich gezeigt, dass unter Microsoft Windows die begrenzte Anzahl von Window Handles die Anwendungsmöglichkeiten von Visualisierungs- und Experimentiersoftware, wie des Produktes "ControlDesk" der Anmelderin, derart beschränkt, dass die eigentlichen Möglichkeiten der Software nicht voll ausgeschöpft werden können.

Bei "ControlDesk" handelt es sich um eine Software, die unter anderem zur Visualisierung von Bussystemen wie CAN, LIN, Flexray und Ethernet auf einem Computersystem dient. Insbesondere bei der Verwendung mit Ethernet ist dabei ein sehr hohes Datenaufkommen möglich, was eine Vielzahl von verschiedenen Anzeigebereichen erfordern kann. Bei ControlDesk lassen sich mehrere Simulations-, Steuergeräte- und Busgrößen schnell über eine einzige Drag&Drop-Aktion in einem mehrzeiligen Instrument kompakt darstellen. In Plotter-Instrumenten lassen sich laufende Messungen beobachten und mit vorherigen Aufzeichnungen vergleichen. Ein Time-Cursor erlaubt hierbei den Sprung zu beliebigen Zeitpunkten im Datenmaterial. Mehrere Plotter lassen sich beim Scrollen zeitlich miteinander synchronisieren. Der Plotter kann in eine getriggerte Darstellung geschaltet werden, um z. B. wie bei einem Oszilloskop hochfrequente Signale einfacher analysieren zu können, z. B. für die Auswertung der Sprungantwort eines Systems. Insgesamt liegt damit mit ControlDesk ein extrem mächtiges Werkzeug mit einer Vielzahl von Funktionen und Möglichkeiten vor, was aufgrund der damit verbundenen sehr großen möglichen Datenmenge die oben angesprochene Problematik mit der beschränkten Anzahl von Handles noch weiter verstärkt.

Wie z.B. in der EP 2 034 407 A1 beschrieben, liegt eine mögliche Lösung in solchen Fällen darin, einige dieser Anzeigebereiche fensterlos (windowless) zu konfigurieren. Ein fensterloser Anzeigebereich ist ein Anzeigebereich, dem kein eigenes Window Handle zugeordnet ist und dem ein sogenannter Container bzw. ein Parent-Fenster ein gemeinsames Window Handle zur Verfügung stellt. Mit anderen Worten: Der mit einem Window Handle versehene Container bietet die Grundlage für eine Vielzahl von fensterlosen Anzeigebereichen, ohne dass mit jedem neuen Anzeigebereich ein weiteres Window Handle verbraucht wird.

Weiterhin beschreibt die DE 692 205 83 T2 eine Sequenzereinrichtung zum Bestimmen einer Sequenz von zweidimensionalen Anzeigebereichen. Es ist eine Vorwärts- und eine Rückwärtsrichtung definiert, sodass eine Hierarchie zwischen fensterbehafteten Anzeigebereichen geschaffen wird. Gemäß der Vorwärts- oder Rückwärtsrichtung kann zwischen den Anzeigebereichen "geblättert" werden.

Die WO 01/95041 A1 beschreibt allgemein eine Benutzeroberfläche für die Bereitstellung von Echtzeit-Prozessdaten mit einer offenen Anzeigeseitenstruktur und der Trennung der Bereitstellung von Daten und serverspezifischen Benutzerinteraktionen.

Anzeigebereiche ohne Fenster (fensterlose Anzeigebereiche) und Anzeigebereiche mit Fenster (fensterbehaftete Anzeigebereiche) haben einen entscheidenden Unterschied: Fensterbehaftete Anzeigebereiche werden vom Betriebssystem (wie bei Microsoft Windows) gegeneinander ausgeblendet, um so eine Hierarchie herzustellen. Hierbei wird der Inhalt eines fensterbehafteten Anzeigebereichs automatisch überschrieben, sobald ein anderer fensterbehafteter Anzeigebereiche weiter oben in der Hierarchie steht. Konkret:
Ein fensterbehafteter Anzeigebereich, der sich weiter oben in der Hierarchie befindet, überlappt bzw. überschreibt die Anzeigebereiche. Das gilt jedenfalls für alle Child-Fenster des Desktops des Betriebssystems, also den fensterbehafteten Inhalt des Desktops. Alles was direkt auf dem Desktop dargestellt wird, wie ein Hintergrundbild, Programm-Icons usw. wird automatisch von fensterbehafteten Anzeigebereichen überschrieben.

Fensterlose Anzeigebereich verhalten sich anders. Sie werden direkt auf dem Parent-Fenster, auch als "Container" bezeichnet, dargestellt. Hier definiert allein die Reihenfolge des Darstellens die Hierarchie. Der zuletzt dargestellte Anzeigebereich erscheint für den Betrachter im Vordergrund. Diese Anzeigebereiche sind mangels direkt zugeordneter Window Handles dem Betriebssystem nicht bekannt.

Hier gilt also, dass Anzeigebereiche auf dem Layout vorhanden sind, die nicht durch ein Fenster und damit auch nicht durch ein Window Handle repräsentiert werden. Ein Mischbetrieb von fensterbehafteten Anzeigebereichen und fensterlosen Anzeigebereichen würde also dazu führen, dass fensterbehaftete Anzeigebereiche immer den darunterliegenden Bereich des Layouts überschreiben. Es wäre also nicht möglich, einen fensterlosen Anzeigebereich vor einem fensterbehafteten Anzeigebereich darzustellen.

Davon ausgehend ist es die Aufgabe der Erfindung, eine effiziente Möglichkeit für einen Mischbetrieb mit fensterbehafteten Anzeigebereichen und fensterlosen Anzeigebereichen bereitzustellen.

Diese Aufgabe wird durch den Gegenstand des Patentanspruchs 1 gelöst. Bevorzugte Weiterbildungen finden sich in den Unteransprüchen.

Erfindungsgemäß ist somit ein Verfahren zum Darstellen von Anzeigebereichen auf einem Desktop mit folgenden Verfahrensschritten vorgesehen:
- Empfangen von Daten zum Erstellen und Anzeigen eines fensterbehafteten Anzeigebereichs,
- Erstellen des fensterbehafteten Anzeigebereichs auf der Grundlage der dafür empfangenen Daten unter Zuordnung eines eindeutigen Window Handles aus einer vorbestimmten Gruppe von Window Handles und eines eindeutigen, von den Window Handles verschiedenen Anzeigenidentifizierers,

- Abspeichern der Zuordnung des Anzeigenidentifizierers des fensterbehafteten Anzeigebereichs zu dem fensterbehafteten Anzeigebereich,
- Abspeichern des Anzeigenidentifizierers des fensterbehafteten Anzeigebereichs an einer vorbestimmten Stelle in einer hierarchischen Liste,
- Anzeigen des fensterbehafteten Anzeigenbereichs auf dem Desktop,
- Empfangen von Daten zum Erstellen und Anzeigen eines fensterlosen Anzeigebereichs,
- Erstellen des fensterlosen Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des fensterlosen Anzeigebereichs zu dem fensterlosen Anzeigebereich,
- Abspeichern des Anzeigenidentifizierers des fensterlosen Anzeigebereichs an einer vorbestimmten Stelle in der hierarchischen Liste,
- Anzeigen des fensterlosen Anzeigenbereichs auf dem Desktop, wobei der fensterlose Anzeigenbereich vor dem fensterbehafteten Anzeigebereich angezeigt wird, wenn in der hierarchischen Liste die Stelle des Anzeigenidentifizierers des fensterlosen Anzeigebereichs hierarchisch vor der Stelle des Anzeigenidentifizierers des fensterbehafteten Anzeigebereichs liegt, und umgekehrt.

Wenn es vorliegend heißt, dass ein Anzeigebereich auf dem Desktop vor bzw. hinter einem anderen Anzeigebereich angezeigt wird, bedeutet das, dass ein vor einem anderen Anzeigebereich liegender Anzeigebereich den darunter liegenden Anzeigebereich in dem Überlappungsbereich der beiden Anzeigebereiche überdeckt, so dass nur der vordere Anzeigebereich zu sehen ist. Es handelt sich praktisch um die Position eines Anzeigebereichs auf dem Desktop in z-Richtung, die senkrecht zur Ebene des Desktops verläuft, wenn die Ebene des Desktops ihrerseits durch die x-Richtung und die y-Richtung aufgespannt ist. Die x- bzw. y-Koordinaten eines Anzeigebereichs werden im Folgenden mit "Ort auf dem Desktop" bezeichnet, während die Stellung eines Anzeigebereichs hinsichtlich seiner relativen z-Koordinate, entsprechend der durch die Liste gegebenen Hierarchie, im Folgenden als "Reihenfolge auf dem Desktop" bezeichnet wird. Diese Reihenfolge auf dem Desktop bestimmt also, ob ein Anzeigebereich vor oder hinter einem anderen Anzeigebereich steht und was insofern von dem jeweiligen Anzeigebereich - aufgrund von Überdeckungen durch andere Anzeigebereiche - angezeigt wird.

Die Erfindung ermöglicht damit, auch dann fensterlose Anzeigenbereiche auf dem Desktop anzuzeigen, wenn das Desktop auch fensterbehaftete Anzeigebereiche aufweist. Dies wird dadurch ermöglicht, dass zusätzlich zu den Window Handles Anzeigenidentifizierer verwendet werden, die in einer hierarchischen Liste abgespeichert werden. Dabei gilt, dass ein fensterloser Anzeigenbereich vor einem fensterbehafteten Anzeigebereich angezeigt wird, wenn in der hierarchischen Liste die Stelle des Anzeigenidentifizierers des fensterlosen Anzeigebereichs hierarchisch vor der Stelle des Anzeigenidentifizierers des fensterbehafteten Anzeigebereichs liegt, und umgekehrt. Insgesamt sind damit theoretisch unendlich viele verschiedene Anzeigebereich möglich, da diese - von der Anzeigbarkeit her - als vollwertige Anzeigebereiche ausgestaltet werden können, ohne dass mit einem Window Handle versehen werden müssen, von denen nur eine begrenzte Anzahl zur Verfügung steht.

Vorzugsweise weist das Verfahren folgende zusätzliche Verfahrensschritten auf:
- Empfangen von Daten zum Erstellen und Anzeigen eines weiteren Anzeigebereichs,
- Erstellen des weiteren Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des weiteren Anzeigebereichs zu dem weiteren Anzeigebereich,
- Abspeichern des Anzeigenidentifizierers des weiteren Anzeigebereichs an einer vorbestimmten Stelle in der hierarchischen Liste,
- Anzeigen des weiteren Anzeigenbereichs auf dem Desktop relativ zu dem fensterbehafteten Anzeigenbereich und dem fensterlosen Anzeigenbereich entsprechend der hierarchischen Stellung des Anzeigenidentifizierers des weiteren Anzeigebereichs relativ zu der hierarchischen Stellung des Anzeigenidentifizierers des fensterbehafteten Anzeigebereichs und der hierarchischen Stellung des Anzeigenidentifizierers des fensterlosen Anzeigebereichs in der hierarchischen Liste.

Allgemein bedeutet dies, dass es gemäß dieser bevorzugten Weiterbildung der Erfindung eine Vielzahl von weiteren Anzeigebereichen geben kann, für die die Reihenfolge auf dem Desktop mittels des erfindungsgemäßen Verfahrens festgelegt wird, also ohne auf Window Handles zurückzugreifen, die nur in beschränkter Menge zur Verfügung stehen. Der weitere Anzeigebereich kann fensterbehaftet oder fensterlos sein; ist er fensterbehaftet wird natürlich auch ein Window Handle vergeben, wobei die Reihenfolge auf dem Desktop gleichwohl durch den jeweiligen Anzeigenidentifizierer in der hierarchischen Liste bestimmt wird. Diese Schritte des Verfahrens können für weitere Anzeigebereiche wiederholt werden; im Fall von fensterlosen Anzeigebereichen im Prinzip beliebig oft.

Gemäß einer weiteren bevorzugten Ausgestaltung der Erfindung weist das Verfahren folgende zusätzliche Verfahrensschritte auf:
- Empfangen von Daten zum Erstellen und Anzeigen eines ersten weiteren fensterlosen Anzeigebereichs innerhalb eines auf dem Desktop schon angezeigten Anzeigebereichs,
- Erstellen des ersten weiteren fensterlosen Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des ersten weiteren fensterlosen Anzeigebereichs zu dem ersten weiteren fensterlosen Anzeigebereich,
- Abspeichern des Anzeigenidentifizierers des ersten weiteren fensterlosen Anzeigebereichs an einer vorbestimmten Stelle in einer hierarchischen, dem schon angezeigten Anzeigebereich zugeordneten Unterliste,
- Anzeigen des ersten weiteren fensterlosen Anzeigenbereichs innerhalb des auf dem Desktop schon angezeigten Anzeigebereichs,
- Empfangen von Daten zum Erstellen und Anzeigen eines zweiten weiteren fensterlosen Anzeigebereichs innerhalb des auf dem Desktop schon angezeigten Anzeigebereichs,
- Erstellen des zweiten weiteren fensterlosen Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des zweiten weiteren fensterlosen Anzeigebereichs zu dem zweiten weiteren fensterlosen Anzeigebereich,
- Abspeichern des Anzeigenidentifizierers des zweiten weiteren fensterlosen Anzeigebereichs an einer vorbestimmten Stelle in der hierarchischen, dem schon angezeigten Anzeigebereich zugeordneten Unterliste,
- Anzeigen des zweiten weiteren fensterlosen Anzeigenbereichs innerhalb des auf dem Desktop schon angezeigten Anzeigebereichs, wobei der erste weitere fensterlose Anzeigenbereich vor dem zweiten weiteren fensterlosen Anzeigebereich angezeigt wird, wenn in der dem schon angezeigten Anzeigebereich zugeordneten Unterliste die Stelle des Anzeigenidentifizierers des ersten weiteren fensterlosen Anzeigebereichs hierarchisch vor der Stelle des zweiten weiteren fensterlosen Anzeigenidentifizierers des fensterbehafteten Anzeigebereichs liegt, und umgekehrt.

Auf diese Weise wird das verwirklicht, was man als "Containerfunktion" eines Anzeigebereichs bezeichnen kann. Dieser als Container wirkende Anzeigebereich kann grundsätzlich fensterlos oder fensterbehaftet sein. Es können selbstverständlich auch weitere fensterlose Anzeigebereiche, wie ein dritter fensterloser Anzeigebereich, ein vierter fensterloser Anzeigebereich usw., in dem Container dargestellt werden. Nach außen hin, also gegenüber außerhalb des Containers liegenden Anzeigebereichen, werden die in dem Container liegenden Anzeigebereich hinsichtlich der Anzeigehierarchie wie der Container selbst behandelt.

Grundsätzlich könnte dabei der auf dem Desktop schon angezeigten Anzeigebereich, in dem weitere fensterlose Anzeigebereiche angezeigt werden, fensterbehaftet sein. Gemäß einer bevorzugten Weiterbildung der Erfindung gilt jedoch, dass der auf dem Desktop schon angezeigten Anzeigebereich, in dem weitere fensterlose Anzeigebereiche angezeigt werden, fensterlos ist. Auch hier gilt wieder der Vorteil, dass es grundsätzlich beliebig viele fensterlose Anzeigebereiche geben kann, dass keine anzahlmäßige Beschränkung aufgrund von Window Handles vorhanden ist.

Für das Abspeichern des Anzeigenidentifizierers eines neu angelegten Anzeigebereichs in der hierarchischen Liste bietet die Erfindung verschiedene Möglichkeiten. Gemäß einer bevorzugten Weiterbildung der Erfindung gilt jedoch, dass das Abspeichern des Anzeigenidentifizierers eines neu angelegten Anzeigebereichs an hierarchisch oberster Stelle in der hierarchischen Liste erfolgt. Auf diese Weise ist ein neu angelegter Anzeigebereich immer sofort auch sichtbar, da er aufgrund der Stellung seines Anzeigenidentifizierers in der hierarchischen Liste vor allen anderen Anzeigebereichen dargestellt wird. Zusätzlich oder alternativ ist gemäß einer bevorzugten Weiterbildung der Erfindung das Abspeichern des Anzeigenidentifizierers eines mit einem Zeigegerät auf dem Desktop ausgewählten Anzeigebereichs an hierarchisch oberster Stelle in der hierarchischen Liste vorgesehen. Um einen Anzeigebereich zur Anzeige zu bringen, kann somit dieser Anzeigebereich mit einem Zeigegerät, wie einer Computermaus, einfach ausgewählt, z.B. angeklickt, werden.

Gemäß einer bevorzugten Weiterbildung der Erfindung weist das Verfahren ferner folgende Verfahrensschritte auf:
- Anordnen eines Anzeigebereichs an einem vorbestimmten Ort auf dem Layout,
- Bestimmen all der Bereiche der anderen auf dem Desktop angezeigten Anzeigebereiche, die mit dem an dem vorbestimmten Ort angeordneten Anzeigebereich überlappen und
- Herausschneiden dieser überlappenden Bereiche der anderen Anzeigebereiche, so dass der an dem vorbestimmten Ort auf dem Layout angeordnete Anzeigebereich vollständig sichtbar wird.

Auf diese Weise kann ein fensterloser Anzeigebereich angezeigt werden, der in der Reihenfolge der Anzeigebereiche ganz nach vorne gebracht worden ist. Entsprechend kann im Übrigen auch für einen fensterbehafteten Anzeigebereich vorgegangen werden, der sein Fenster auf Überlappungen prüfen und ein Herausschneiden aus seinem Bereich ggf. aktualisieren muss, wenn der fensterbehaftete Anzeigebereich seinen Ort auf dem Desktop ändert. Außerdem kann diese Funktion auch bei den oben beschriebenen Containern verwendet werden: Beim Setzen des Ortes eines Anzeigebereichs innerhalb des Containers (Child-Anzeigebereichs in dem als Parent fungierenden Container) werden die Außengrenzen des Containers geprüft. Ragt ein Child-Anzeigebereich aus dem Container heraus, wird es entsprechend beschnitten.

Grundsätzlich können die Anzeigen auf dem Desktop, also die verschiedenen Anzeigebereiche auf dem Desktop, auf verschiedenen Arten von Daten beruhen. Gemäß einer bevorzugten Weiterbildung der Erfindung weist das Verfahren jedoch folgende Verfahrensschritte auf:
- fortlaufendes Empfangen von Daten zum Aktualisieren der Anzeigen eines auf dem Desktop angezeigten Anzeigebereichs,
- Aktualisieren der Anzeigen des auf dem Desktop angezeigten Anzeigebereichs auf der Grundlage der fortlaufend empfangenen Daten, und
- Verkleinern bzw. Ausblenden des Anzeigebereichs auf einen Nutzerbefehl hin, wobei für den verkleinerten bzw. ausgeblendeten Anzeigenbereich das fortlaufende Empfangen von Daten unterbrochen wird.

Fortlaufendes Empfangen von Daten heißt dabei, dass immer wieder neue Daten empfangen werden, z.B. aktuelle Messdaten. Dieses Empfangen kann z.B. kontinuierlich erfolgen, in einem vorbestimmten Takt oder ereignisorientiert. Ein Verkleinern eines Anzeigebereichs erfolgt vorzugsweise zu einem auf dem Desktop abgelegten Icon, also ohne weiteren sichtbaren Inhalt, oder zu einer reinen Fensterleiste, z.B. durch ein Einklappen, ggf. mit einer Bezeichnung des Anzeigebereichs in der Fensterleiste. Wird ein Container verkleinert bzw. ausgeblendet, werden alle in dem Container enthaltenen Anzeigebereiche nicht mehr angezeigt und auch das fortlaufende Empfangen von Daten für diese Anzeigebereiche wird unterbrochen. Diese Unterbrechung des Datenempfangs wird beendet, wenn der Anzeigebereich, also z.B. der Container, wieder geöffnet wird, z.B. durch Ausklappen.

Das Verfahren kann für ganz verschiedene Anwendungen verwendet werden. Gemäß einer bevorzugten Weiterbildung der Erfindung werden die Anzeigebereiche jedoch zur Anzeige von Messdateninstrumenten für Echtzeit-Messdaten bei Hardware-in-the-Loop Anwendungen verwendet werden. Ganz besonders bevorzugt werden hierfür die fensterlosen Anzeigebereiche innerhalb eines Containers verwendet.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch ein Desktop mit zwei Instrumenten, die von herkömmlichen fensterbehafteten Anzeigebereichen gebildet werden, und einem leeren nicht fensterbehafteten Container-Instrument gemäß einem bevorzugten Ausführungsbeispiel der Erfindung,
- Fig. 2: schematisch ein Desktop mit einem großen Instrument, das von einem herkömmlichen fensterbehafteten Anzeigebereich gebildet wird, und einem leeren nicht fensterbehafteten Container-Instrument gemäß einem anderen bevorzugten Ausführungsbeispiel der Erfindung,
- Fig. 3: einen Ausschnitt aus dem Desktop aus Fig. 2, wobei dem nicht fensterbehafteten Container-Instrument das große Instrument hinzugefügt worden ist, und
- Fig. 4: das Desktop aus Fig. 1, wobei dem nicht fensterbehafteten Container-Instrument eine Mehrzahl von Instrumenten hinzugefügt worden sind, die teilweise ebenfalls als Container-Instrumente ausgestaltet sind.

Vor der nachfolgenden Beschreibung eines bevorzugten Ausführungsbeispiels der Erfindung sei der Vollständigkeit halber nochmals kurz auf die der Erfindung zu Grunde liegen Problematik hingewiesen. Dabei wird vorliegend exemplarisch davon ausgegangen, dass es sich um eine Anwendung unter dem Betriebssystem Microsoft Windows handelt. Selbstverständlich ist der Einsatz anderer Betriebssysteme, wie MacOS oder Linux, im Rahmen der vorliegenden Erfindung ebenfalls möglich.

Fensterlose Anzeigebereiche und fensterbehaftete Anzeigebereiche weisen einen wesentlichen Unterschied auf: Fensterbehaftete Anzeigebereiche werden vom Betriebssystem (wie bei Microsoft Windows) gegeneinander ausgeblendet, um so eine Hierarchie herzustellen. Alles was direkt auf dem Desktop dargestellt wird, wie ein Hintergrundbild, Programm-Icons usw. wird damit automatisch von fensterbehafteten Anzeigebereichen überschrieben. Fensterlose Anzeigebereich verhalten sich dagegen anders: Sie werden nämlich direkt auf einem Parent-Fenster (Container) dargestellt. Hier definiert allein die Reihenfolge des Darstellens die Hierarchie. Der zuletzt dargestellte Anzeigebereich erscheint für den Betrachter im Vordergrund. Diese Anzeigebereiche sind mangels direkt zugeordneter Window Handles dem Betriebssystem nicht bekannt. Das bedeutet aber, dass Anzeigebereiche auf dem Layout vorhanden sind, die nicht durch ein Window Handle repräsentiert werden. Ein Mischbetrieb von fensterbehafteten Anzeigebereichen und fensterlosen Anzeigebereichen könnte ohne weitere Maßnahmen also dazu führen, dass fensterbehaftete Anzeigebereiche immer den darunterliegenden Bereich des Layouts überschreiben, was es unmöglich machen würde, einen fensterlosen Anzeigebereich vor einem fensterbehafteten Anzeigebereich darzustellen.

Hier greift das nachfolgend beschriebene Container-Instrument gemäß dem vorliegenden bevorzugten Ausführungsbeispiel der Erfindung ein. Der vorliegend beschriebene Anwendungsbereich ist die Nutzung von Anzeigebereichen auf einem Desktop zur Anzeige von Messdateninstrumenten für Echtzeit-Messdaten bei Hardware-in-the-Loop Anwendungen. Dabei ist das Container-Instrument als fensterloser Anzeigebereich konzipiert. Diesem Container-Instrument können einzelne Instrumente hinzugefügt werden, nämlich als Child-Anzeigebereiche, die in dem Container gehalten werden, der damit als Parent-Anzeigebereich fungiert. Diese Instrumente werden dann also im Container-Instrument verwaltet und innerhalb des durch das Container-Instrument definierten Anzeigebereichs angezeigt. Dadurch sind sie unabhängig vom Layout, können z.B. verschoben und/oder gescrollt werden, ohne dass dies einen direkten Einfluss auf das Layout hat.

Wie gesagt, ist das Container-Instrument fensterlos, d.h. es kommt ohne Window Handle aus. Da die Anzahl von Window Handles betriebssystemweit begrenzt sind und nicht erweitert werden kann, schont es somit die Ressourcen und kann von der Anzahl im Prinzip her unbegrenzt zeitgleich eingesetzt werden.

Es können im Übrigen auch weitere Container-Instrumente im Container-Instrument benutzen werden. Dadurch können eine Mehrzahl von Instrumenten komplett durch ein Container-Instrument ersetzt werden. Außerdem können so bisher nicht existierende Instrumente auf einfache Weise erstellt werden.

Der Inhalt des Container-Instruments ist ausblendbar. Das heißt, dass das Container-Instrument z.B. zusammengeklappt werden kann. Dann bleibt nur noch eine minimale Repräsentanz des Instruments auf dem Desktop erhalten. Diese Repräsentanz des Instruments auf dem Desktop kann frei konfigurierbar sein.

In besonderem Maße schont es die Resourcen, wenn das Zusammenklappen des Container-Instruments dazu führt, dass alle im Container-Instrument enthaltenen Instrumente von der Darstellung der Daten während einer Messung abgekapselt werden. Das heißt, dass diese Instrumente die Performance des Gesamtsystems nicht belastet und der Nutzer des Systems im Einzelnen entscheiden kann, was er sehen möchte. Der Nutzer kann einstellen, wie sich das Instrument verhalten soll, also ob es sich automatisch vergrößern bzw. verkleinern soll oder nicht, scrollen soll oder nicht, enthaltene Instrumente verändert werden können oder nicht usw.

Probleme mit Resourcen/Performance werden im Stand der Technik bisher dadurch gelöst, dass ein Layout nur einen kleinen Teil der Instrumente beinhaltet und eine Verteilung auf mehrere Layouts erfolgt, die dann nach Bedarf geöffnet oder geschlossen werden. Platzprobleme auf dem Layout werden bisher in der Regel dadurch gelöst, dass man scrollt oder Anzeigen auf andere Layouts auslagert. Das ist nicht mehr notwendig, wenn das Container-Instrument gemäß dem vorliegend beschriebenen bevorzugten Ausführungsbeispiel der Erfindung genutzt wird, bei dem beim Einklappen/Verkleinern des Anzeigebereichs auch keine Daten mehr für die nicht angezeigten Instrumente empfangen werden.

Konkret kann das zuvor beschriebene Container-Element wie folgt ausgestaltet sein:

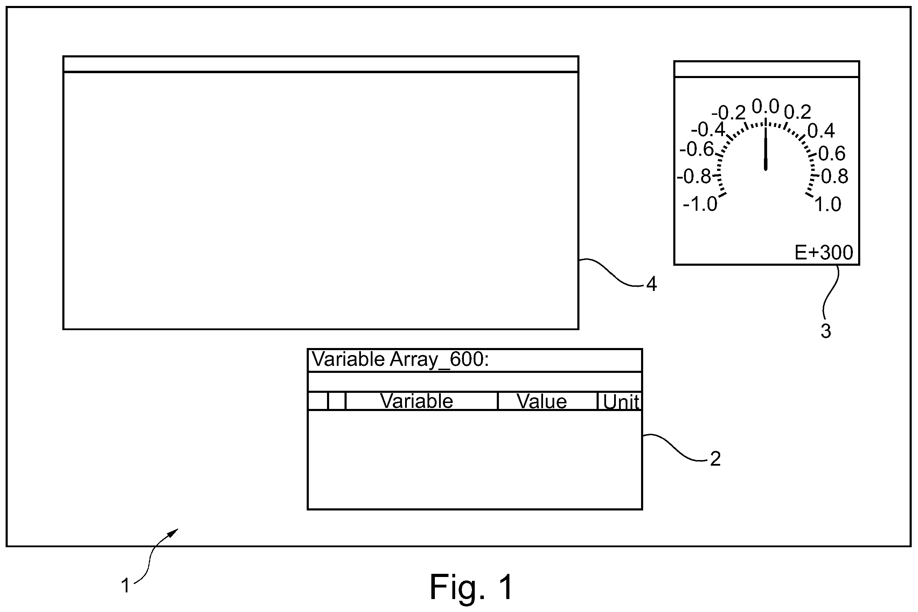

Fig. 1 zeigt ein Desktop 1 mit zwei Instrumenten 2, 3, die von herkömmlichen fensterbehafteten Anzeigebereichen gebildet werden. Im Übrigen ist auf dem Desktop 1 ein leeres Container-Instrument 4 vorhanden. Wie aus Fig. 1 ersichtlich, sieht das vorliegend beschriebene Container-Instrument 4 an sich im Wesentlichen aus wie ein leeres Instrument, also ein Instrument ohne Anzeige von Messdaten oder ähnlichem.

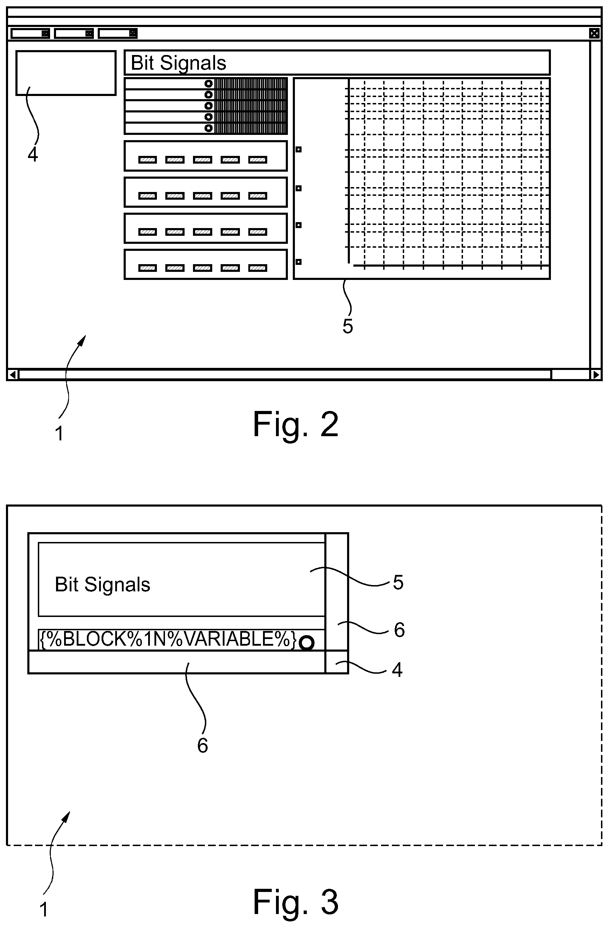

Ein anderes Beispiel für ein Desktop 1 mit einem Container-Element 4 zeigt Fig. 2. Dabei weist der Desktop 1 in Fig. 2 zusätzlich noch ein sehr großes Instrument 5 auf, das den größten Teil des Desktops 1 einnimmt. Fügt man nun dieses große Instrument 5, wie in Fig. 3 dargestellt, dem Container-Instrument 4 hinzu, sind die Anzeigen des großen Instruments 5 weiterhin grundsätzlich verfügbar, allerdings, wenn gewünscht, auf kleinerem Raum. Konkret wurde hier der komplette Inhalt des großen Instruments 5 aus Fig. 2 dem Container-Instrument 4 hinzugefügt. Wie man sieht, ergibt sich eine deutliche Platzersparnis, da das Container-Instrument 4 verkleinert werden kann und dann Scroll-Balken 6 angezeigt werden, um an die verdeckten Instrumentenbereiche gelangen zu können.

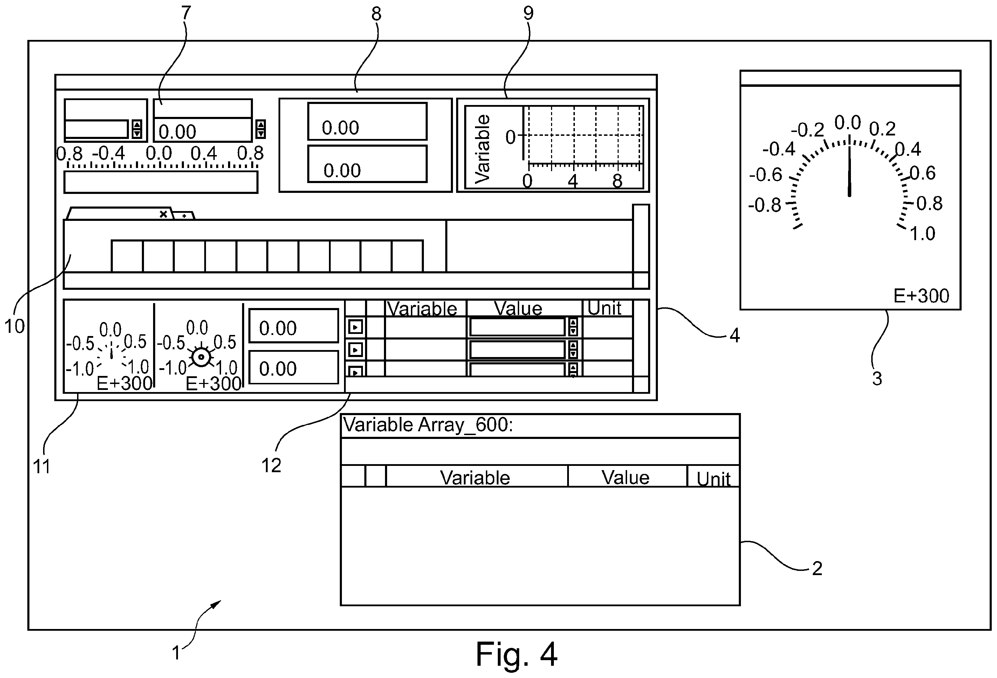

Noch deutlicher wird der Vorteil des Container-Instruments 4, wenn man Container-Instrumente 7, 8, 9, 10, 11, 12 im Container-Instrument 4 benutzt, wie exemplarisch in Fig. 4 dargestellt. Hier wurden verschiedene Instrumente 7, 8, 9, 10, 11, 12 zu dem Container-Instrument 4 aus Fig. 1 hinzugefügt. Man erkennt, dass einzelne Bereiche gescrollt werden können und damit ein vorher definierter Platzbedarf ausreicht sowie eine vordefinierte Struktur innerhalb des Layouts eingehalten werden kann. Weiterhin wird hier deutlich, dass die Instrumente 7, 10, 12 im Container-Instrument 4 lokal gescrollt werden können, wodurch andere Instrumente 7, 8, 9, 11 im Container-Instrument 4 sowie andere Instrumente 2, 3 außerhalb des Container-Instruments 4 nicht beeinflusst werden.

Grundsätzlich können Container-Instrumente mit anderen Container-Instrumenten in beliebig tiefen Ebenen verschachtelt werden. Damit kann jedes Container-Instrument grundsätzlich beliebig viele Container-Instrumente beinhalten, welche ihrerseits beliebig viele Container Instrumente beinhalten können. Dabei sind die Container-Instrumente zeitgleich unbegrenzt einsetzbar, können beliebig viele Ebenen darstellen, verbrauchen keine Window Handles und verbrauchen auch nur wenig Speicher. Zudem können ausgeblendete Instrumente soweit "abgeschaltet" werden, dass sie annährend keine Ressourcen mehr verbrauchen. Dementsprechend steht dem System/der Applikation mehr Leistung zur Verfügung.

Vorliegend ist es möglich, fensterlose Instrumente, entsprechend fensterlosen Anzeigebereichen, über bzw. vor fensterbehafteten Instrumenten, entsprechend fensterbehafteten

Anzeigebereichen darzustellen. Die damit verbundene und weiter oben genannte Problematik wird dabei wie folgt gelöst:
Jedes Instrument, unabhängig davon, ob es fensterlos oder fensterbehaftet ist, bekommt beim Anlegen einen eindeutigen, von den Window Handles verschiedenen Anzeigenidentifizierer. Es wird eine hierarchische Liste mit diesen Anzeigenidentifizierern gespeichert sowie die Zuordnung eines jeweiligen Anzeigenidentifizierers zu einem jeweiligen Instrument. Die Position des jeweiligen Anzeigenidentifizierers in dieser hierarchischen Liste bestimmt die Reihenfolge der Instrumente auf dem Layout, also ob ein Instrument vor oder hinter einem anderen Instrument dargestellt wird. Vorliegend ist das erste Element in der Liste ganz oben auf dem Layout. Das Instrument im Vordergrund hat den Platz ganz am Anfang der Liste. Rückt ein Instrument nach vorne, wird es also dementsprechend weiter vorne in der Liste platziert. Somit ergibt sich eine eindeutige Reihenfolge.

Beim Setzen des Ortes eines Instruments auf dem Layout, also seiner x- und y-Koordinaten, werden alle darunterliegenden Instrumente gesucht, die mit dem Instrument überlappen. Das ist aufgrund der hierarchischen Liste möglich. Dadurch erhält man den eindeutigen Anzeigenidentifizierer und damit wiederum das entsprechende Instrument, so dass dessen Position abgefragt werden kann.

Sind alle überlappenden Instrumente gefunden und in einer Liste gespeichert worden, wird zusätzlich eine Liste mit den überlappenden Instrumenten erstellt. Für jedes Instrument in der Liste wird der gemeinsame Bereich aus dem jeweiligen Instrument herausgeschnitten. Unter dem Betriebssystem Microsoft Windows ist dies z.B. mit der WindowsAPI Funktion "SetWindowRgn(...)" möglich. Damit kann dann auch ein fensterloses Instrument vor einem fensterbehafteten Instrument erscheinen, da der aufgeschnittene Bereich des Instruments nun nicht mehr vom Betriebssystem gezeichnet wird. Oder anders gesagt: Der dahinter liegende Bereich wird sichtbar, und damit auch das Instrument, das weiterhin direkt auf dem Layout gezeichnet wird aber für den Nutzer damit vor dem fensterbehafteten Instrument erscheint. Genauso prüft ein fensterbehaftetes Instrument seinen Anzeigebereich nach Überlappungen, wenn es seinen Ort auf dem Layout ändert, und modifiziert ggf. sein Clipping.

Genau diese Technologie benutzt vorliegend auch das Container-Instrument um sowohl fensterbehaftete also auch fensterlose Instrumente darstellen zu können. Das Container-Instrument ist fensterlos und verhält sich wie jedes andere fensterlose Instrument auch, so dass es sich vor fensterbehaftete Instrumente zeichnen kann. Daher muss es sich nur um seinen eigenen Inhalt, die Child-Instrumente, kümmern. Das Instrument ist also quasi ein fensterloses Parent-Instrument für darin anzeigbare Instrumente.

Zusätzlich überprüft das Container-Instrument beim Setzen des Ortes eines Child-Instruments das Clipping des Child-Instruments auf seine Außengrenzen. Ragt ein Fenster aus dem Container-Instrument heraus (Prüfen über "ClientRectangle"), wird es mit der Funktion "SetWindowRgn(...)" geclippt. Beim Einklappen werden alle Child-Instrumente nicht mehr gezeichnet und sind so nicht mehr sichtbar. Die Fenster von fensterbehafteten Instrumenten werden per WindowsAPI-Funktion "ShowWindow" versteckt.

Beim Ausklappen werden alle Child-Instrumente wieder normal gezeichnet, und die Anzeigebereiche von fensterbehafteten Instrumenten werden mit der WindowsAPI-Funktion "ShowWindow" wieder sichtbar gemacht.

### Bezugszeichenliste

- 1: Desktop
- 2: Instrument
- 3: Instrument
- 4: Container-Instrument mit ggf. darin angezeigten Instrumenten
- 5: großes Instrument
- 6: Scroll-Balken
- 7: Instrument im Container-Instrument
- 8: Instrument im Container-Instrument
- 9: Instrument im Container-Instrument
- 10: Instrument im Container-Instrument
- 11: Instrument im Container-Instrument
- 12: Instrument im Container-Instrument

## Patentansprüche

1. Verfahren zum Darstellen von Anzeigebereichen (2, 3, 4) auf einem Desktop (1) mit folgenden Verfahrensschritten:
- Empfangen von Daten zum Erstellen und Anzeigen eines fensterbehafteten Anzeigebereichs (2, 3),
- Erstellen des fensterbehafteten Anzeigebereichs (2, 3) auf der Grundlage der dafür empfangenen Daten unter Zuordnung eines eindeutigen Window Handles aus einer vorbestimmten Gruppe von Window Handles und eines eindeutigen, von den Window Handles verschiedenen Anzeigenidentifizierers,
- Abspeichern der Zuordnung des Anzeigenidentifizierers des fensterbehafteten Anzeigebereichs (2, 3) zu dem fensterbehafteten Anzeigebereich (2, 3),
- Abspeichern des Anzeigenidentifizierers des fensterbehafteten Anzeigebereichs (2, 3) an einer vorbestimmten Stelle in einer hierarchischen Liste,
- Anzeigen des fensterbehafteten Anzeigenbereichs (2, 3) auf dem Desktop (1),
- Empfangen von Daten zum Erstellen und Anzeigen eines fensterlosen Anzeigebereichs (4),
- Erstellen des fensterlosen Anzeigebereichs (4) auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des fensterlosen Anzeigebereichs (4) zu dem fensterlosen Anzeigebereich,
- Abspeichern des Anzeigenidentifizierers des fensterlosen Anzeigebereichs (4) an einer vorbestimmten Stelle in der hierarchischen Liste,
- Anzeigen des fensterlosen Anzeigenbereichs (4) auf dem Desktop (1), wobei der fensterlose Anzeigenbereich (4) vor dem fensterbehafteten Anzeigebereich (2, 3) angezeigt wird, wenn in der hierarchischen Liste die Stelle des Anzeigenidentifizierers des fensterlosen Anzeigebereichs (4) hierarchisch vor der Stelle des Anzeigenidentifizierers des fensterbehafteten Anzeigebereichs (2, 3) liegt, und umgekehrt.

2. Verfahren nach Anspruch 1, mit folgenden zusätzlichen Verfahrensschritten:
- Empfangen von Daten zum Erstellen und Anzeigen eines weiteren Anzeigebereichs,
- Erstellen des weiteren Anzeigebereichs auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des weiteren Anzeigebereichs zu dem weiteren Anzeigebereich,
- Abspeichern des Anzeigenidentifizierers des weiteren Anzeigebereichs an einer vorbestimmten Stelle in der hierarchischen Liste,
- Anzeigen des weiteren Anzeigenbereichs auf dem Desktop relativ zu dem fensterbehafteten Anzeigenbereich (2, 3) und dem fensterlosen Anzeigenbereich (4) entsprechend der hierarchischen Stellung des Anzeigenidentifizierers des weiteren Anzeigebereichs relativ zu der hierarchischen Stellung des Anzeigenidentifizierers des fensterbehafteten Anzeigebereichs (2, 3) und der hierarchischen Stellung des Anzeigenidentifizierers des fensterlosen Anzeigebereichs (4) in der hierarchischen Liste.

3. Verfahren nach Anspruch 1 oder 2 mit folgenden zusätzlichen Verfahrensschritten:
- Empfangen von Daten zum Erstellen und Anzeigen eines ersten weiteren fensterlosen Anzeigebereichs (7) innerhalb eines auf dem Desktop (1) schon angezeigten Anzeigebereichs (4),
- Erstellen des ersten weiteren fensterlosen Anzeigebereichs (7) auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des ersten weiteren fensterlosen Anzeigebereichs (7) zu dem ersten weiteren fensterlosen Anzeigebereich (7),
- Abspeichern des Anzeigenidentifizierers des ersten weiteren fensterlosen Anzeigebereichs (7) an einer vorbestimmten Stelle in einer hierarchischen, dem schon angezeigten Anzeigebereich (4) zugeordneten Unterliste,
- Anzeigen des ersten weiteren fensterlosen Anzeigenbereichs (7) innerhalb des auf dem Desktop schon angezeigten Anzeigebereichs (4),
- Empfangen von Daten zum Erstellen und Anzeigen eines zweiten weiteren fensterlosen Anzeigebereichs (10) innerhalb des auf dem Desktop (1) schon angezeigten Anzeigebereichs (4),
- Erstellen des zweiten weiteren fensterlosen Anzeigebereichs (10) auf der Grundlage der dafür empfangenen Daten unter Zuordnung eines eindeutigen, von den Window Handles verschiedenen Anzeigenidentifizierers,
- Abspeichern der Zuordnung des Anzeigenidentifizierers des zweiten weiteren fensterlosen Anzeigebereichs (10) zu dem zweiten weiteren fensterlosen Anzeigebereich (10),
- Abspeichern des Anzeigenidentifizierers des zweiten weiteren fensterlosen Anzeigebereichs (10) an einer vorbestimmten Stelle in der hierarchischen, dem schon angezeigten Anzeigebereich zugeordneten Unterliste,
- Anzeigen des zweiten weiteren fensterlosen Anzeigenbereichs innerhalb des auf dem Desktop (1) schon angezeigten Anzeigebereichs (4), wobei der erste weitere fensterlose Anzeigenbereich (7) vor dem zweiten weiteren fensterlosen Anzeigebereich (10) angezeigt wird, wenn in der dem schon angezeigten Anzeigebereich zugeordneten Unterliste die Stelle des Anzeigenidentifizierers des ersten weiteren fensterlosen Anzeigebereichs (7) hierarchisch vor der Stelle des zweiten weiteren fensterlosen Anzeigenidentifizierers des fensterbehafteten Anzeigebereichs (10) liegt, und umgekehrt.

4. Verfahren nach Anspruch 3 wobei der auf dem Desktop (1) schon angezeigten Anzeigebereich (4), in dem weitere fensterlose Anzeigebereiche (7, 10) angezeigt werden, fensterlos ist.

5. Verfahren nach einem der vorherigen Ansprüche mit folgendem Verfahrensschritt:
- Abspeichern des Anzeigenidentifizierers eines neue angelegten Anzeigebereichs (10) an hierarchisch oberster Stelle in der hierarchischen Liste.

6. Verfahren nach einem der vorherigen Ansprüche mit folgendem Verfahrensschritt:
- Abspeichern des Anzeigenidentifizierers eines mit einem Zeigegerät auf dem Desktop ausgewählten Anzeigebereichs (10) an hierarchisch oberster Stelle in der hierarchischen Liste.

7. Verfahren nach einem der vorherigen Ansprüche mit folgenden Verfahrensschritten:
- Anordnen eines Anzeigebereichs (4) an einem vorbestimmten Ort auf dem Layout 1),
- Bestimmen all der Bereiche der anderen auf dem Desktop angezeigten Anzeigebereiche (2, 3), die mit dem an dem vorbestimmten Ort angeordneten Anzeigebereich (4) überlappen und
- Herausschneiden dieser überlappenden Bereiche der anderen Anzeigebereiche (2, 3), so dass der an dem vorbestimmten Ort auf dem Layout angeordnete Anzeigebereich (4) vollständig sichtbar ist.

8. Verfahren nach einem der vorherigen Ansprüche mit folgenden zusätzlichen Verfahrensschritten:
- fortlaufendes Empfangen von Daten zum Aktualisieren der Anzeigen eines auf dem Desktop angezeigten Anzeigebereichs (4),
- Aktualisieren der Anzeigen des auf dem Desktop angezeigten Anzeigebereichs (4) auf der Grundlage der fortlaufend empfangenen Daten, und
- Verkleinern bzw. Ausblenden des Anzeigebereichs (4) auf einen Nutzerbefehl hin, wobei für den verkleinerten bzw. ausgeblendeten Anzeigenbereich (4) das fortlaufende Empfangen von Daten unterbrochen wird.

9. Verfahren nach einem der vorherigen Ansprüche, wobei die Anzeigebereiche (2, 3, 4) zur Anzeige von Messdateninstrumenten für Echtzeit-Messdaten bei Hardware-in-the-Loop Anwendungen verwendet werden.

## Claims

1. A method for representing display areas (2, 3, 4) on a desktop (1) having the following method steps:
- receiving data for creating and showing a windowed display area (2, 3),
- creating the windowed display area (2, 3) based on the data received for the same by assigning a unique window handle from a predetermined group of window handles and a unique display identifier different from the window handles,
- saving the assignment of the display identifier of the windowed display area (2, 3) to the windowed display area (2, 3),
- saving the display identifier of the windowed display area (2, 3) at a predetermined position in a hierarchical list,
- displaying the windowed display area (2, 3) on the desktop (1),
- receiving data for creating and showing a windowless display area (4),
- creating the windowless display area (4) based on the data received for the same by assigning a unique display identifier different from the window handles,
- saving the assignment of the display identifier of the windowless display area (4) to the windowless display area,
- saving the display identifier of the windowless display area (4) at a predetermined position in the hierarchical list,
- displaying the windowless display area (4) on the desktop (1), the windowless display area (4) being shown before the windowed display area (2, 3) if the position of the display identifier of the windowless display area (4) lies hierarchically before the position of the display identifier of the windowed display area (2, 3) in the hierarchical list, and vice versa.

2. The method according to claim 1, having the following additional method steps:
- receiving data for creating and showing another display area,
- creating the additional display area based on the data received for the same by assigning a unique display identifier different from the window handles,
- saving the assignment of the display identifier of the additional display area to the additional display area,
- saving the display identifier of the additional display area at a predefined position in the hierarchical list,
- displaying the further display area on the desktop relative to the windowed display area (2, 3) and the windowless display area (4) according to the hierarchical position of the display identifier of the further display area relative to the hierarchical position of the display identifier of the windowed display area (2, 3) and the hierarchical position of the display identifier of the windowless display area (4) in the hierarchical list.

3. The method according to claim 1 or 2, having the following additional method steps:
- receiving data for creating and showing a first additional windowless display area (7) within a display area (4) already shown on the desktop (1),
- creating the first additional windowless display area (7) based on the data received for the same by assigning a unique display identifier different from the window handles,
- saving the assignment of the display identifier of the first further windowless display area (7) to the first further windowless display area (7),
- saving the display identifier of the first further windowless display area (7) at a predetermined position in a hierarchical sub-list assigned to the already shown display area (4),
- displaying the first additional windowless display area (7) within the display area (4) already shown on the desktop,
- receiving data for creating and showing a second additional windowless display area (10) within the display area (4) already shown on the desktop (1),
- creating the second further windowless display area (10) based on the data received for the same by assigning a unique display identifier different from the window handles,
- saving the assignment of the display identifier of the second further windowless display area (10) to the second further windowless display area (10),
- saving the display identifier of the second further windowless display area (10) at a predetermined position in the hierarchical sub-list assigned to the already shown display area,
- displaying the second further windowless display area within the display area (4) already shown on the desktop (1), the first further windowless display area (7) being shown before the second further windowless display area (10) if the position of the display identifier of the first further windowless display area (7) lies hierarchically before the position of the second further windowless display identifier of the windowed display area (10) in the sublist assigned to the display area already shown, and vice versa.

4. The method according to claim 3, wherein the display area (4) already shown on the desktop (1), in which further windowless display areas (7, 10) are shown, is windowless.

5. The method according to any one of the preceding claims, having the following method step:
- saving the display identifier of a newly created display area (10) at the top of the hierarchical list.

6. The method according to any one of the preceding claims, having the following method step:
- saving the display identifier of a display area (10) selected by means of a pointing device on the desktop at the top of the hierarchical list.

7. The method according to any one of the preceding claims, having the following method steps:
- disposing a display area (4) at a predetermined location on the layout 1),
- determining all the areas of the other display areas (2, 3) shown on the desktop that overlap the display area (4) located at the predetermined location, and
- cutting out said overlapping areas of the other display areas (2, 3) so that the display area (4) disposed at the predetermined location on the layout is completely visible.

8. The method according to any one of the preceding claims, having the following additional method steps:
- continuously receiving data for updating the displays of a display area shown on the desktop (4),
- updating the displays of the display area (4) shown on the desktop based on the continuously received data, and
- minimizing or hiding the display area (4) in response to a user command, wherein the continuous reception of data is interrupted for the minimized or hidden display area (4).

9. The method according to any one of the preceding claims, wherein the display areas (2, 3, 4) are used for displaying measurement data instruments for real-time measurement data in hardware-in-the-loop applications.

## Revendications

1. Procédé pour représenter des zones d'affichage (2, 3, 4) sur un bureau (1), comprenant les étapes de procédé suivantes:
- réception de données afin de créer et d'afficher une zone d'affichage fenêtrée (2, 3),
- création de la zone d'affichage fenêtrée (2, 3) sur la base des données reçues à cet effet, par attribution d'un descripteur de fenêtre univoque parmi un groupe prédéterminé de descripteurs de fenêtre et d'un identificateur d'affichage univoque, différent des descripteurs de fenêtre,
- mémorisation de l'attribution de l'identificateur d'affichage de la zone d'affichage fenêtrée (2, 3) à la zone d'affichage fenêtrée (2, 3),
- mémorisation de l'identificateur d'affichage de la zone d'affichage fenêtrée (2, 3) à une position prédéterminée dans une liste hiérarchique,
- affichage de la zone d'affichage fenêtrée (2, 3) sur le bureau (1),
- réception de données afin de créer et d'afficher une zone d'affichage sans fenêtre (4),
- création de la zone d'affichage sans fenêtre (4) sur la base des données reçues à cet effet, par attribution d'un identificateur d'affichage univoque, différent des descripteurs de fenêtre,
- mémorisation de l'attribution de l'identificateur d'affichage de la zone d'affichage sans fenêtre (4) à la zone d'affichage sans fenêtre,
- mémorisation de l'identificateur d'affichage de la zone d'affichage sans fenêtre (4) à une position prédéterminée dans la liste hiérarchique,
- affichage de la zone d'affichage sans fenêtre (4) sur le bureau (1), la zone d'affichage sans fenêtre (4) étant affichée devant la zone d'affichage fenêtrée (2, 3) si, dans la liste hiérarchique, la position de l'identificateur d'affichage de la zone d'affichage sans fenêtre (4) est hiérarchiquement supérieure à la position de l'identificateur d'affichage de la zone d'affichage fenêtrée (2, 3), et inversement.

2. Procédé selon la revendication 1, comprenant les étapes de procédé supplémentaires suivantes:
- réception de données afin de créer et d'afficher une zone d'affichage supplémentaire,
- création de la zone d'affichage supplémentaire sur la base des données reçues à cet effet, par attribution d'un identificateur d'affichage univoque, différent des descripteurs de fenêtre,
- mémorisation de l'attribution de l'identificateur d'affichage de la zone d'affichage supplémentaire à la zone d'affichage supplémentaire,
- mémorisation de l'identificateur d'affichage de la zone d'affichage supplémentaire à une position prédéterminés dans la liste hiérarchique,
- affichage de la zone d'affichage supplémentaire sur le bureau par rapport à la zone d'affichage fenêtrée (2, 3) et à la zone d'affichage sans fenêtre (4) selon la position hiérarchique de l'identificateur d'affichage de la zone d'affichage supplémentaire par rapport à la position hiérarchique de l'identificateur d'affichage de la zone d'affichage fenêtrée (2, 3) et à la position hiérarchique de l'identificateur d'affichage de la zone d'affichage sans fenêtre (4) dans la liste hiérarchique.

3. Procédé selon la revendication 1 ou 2, comprenant les étapes de procédé supplémentaires suivantes:
- réception de données afin de créer et d'afficher une première zone d'affichage sans fenêtre supplémentaire (7) à l'intérieur d'une zone d'affichage (4) déjà affichée sur le bureau (1),
- création de la première zone d'affichage sans fenêtre supplémentaire (7) sur la base des données reçues à cet effet, par attribution d'un identificateur d'affichage univoque, différent des descripteurs de fenêtre,
- mémorisation de l'attribution de l'identificateur d'affichage de la première zone d'affichage sans fenêtre supplémentaire (7) à la première zone d'affichage sans fenêtre supplémentaire (7),
- mémorisation de l'identificateur d'affichage de la première zone d'affichage sans fenêtre supplémentaire (7) à une position prédéterminée dans une sous-liste hiérarchique, attribuée à la zone d'affichage (4) déjà affichée,
- affichage de la première zone d'affichage sans fenêtre supplémentaire (7) à l'intérieur de la zone d'affichage (4) déjà affichée sur le bureau,
- réception de données afin de créer et d'afficher une deuxième zone d'affichage sans fenêtre supplémentaire (10) à l'intérieur de la zone d'affichage (4) déjà affichée sur le bureau (1),
- création de la deuxième zone d'affichage sans fenêtre supplémentaire (10) sur la base des données reçues à cet effet, par attribution d'un identificateur d'affichage univoque, différent des descripteurs de fenêtre,
- mémorisation de l'attribution de l'identificateur d'affichage de la deuxième zone d'affichage sans fenêtre supplémentaire (10) à la deuxième zone d'affichage sans fenêtre supplémentaire (10),
- mémorisation de l'identificateur d'affichage de la deuxième zone d'affichage sans fenêtre supplémentaire (10) à une position prédéterminée dans la sous-liste hiérarchique, attribuée à la zone d'affichage déjà affichée,
- affichage de la deuxième zone d'affichage sans fenêtre supplémentaire à l'intérieur de la zone d'affichage (4) déjà affichée sur le bureau (1), la première zone d'affichage sans fenêtre supplémentaire (7) étant affichée devant la deuxième zone d'affichage sans fenêtre supplémentaire (10) si, dans la sous-liste associée à la zone d'affichage déjà affichée, la position de l'identificateur d'affichage de la première zone d'affichage sans fenêtre supplémentaire (7) est hiérarchiquement supérieure à la position du deuxième identificateur d'affichage sans fenêtre supplémentaire de la zone d'affichage fenêtrée (10), et inversement.

4. Procédé selon la revendication 3, la zone d'affichage (4) déjà affichée sur le bureau (1), dans laquelle sont affichées des zones d'affichage sans fenêtre supplémentaires (7, 10), étant sans fenêtre.

5. Procédé selon l'une des revendications précédentes, comprenant l'étape de procédé suivante:
- mémorisation de l'identificateur d'affichage d'une zone d'affichage nouvellement créée (10) à la position hiérarchique le plus élevée dans la liste hiérarchique,

6. Procédé selon l'une des revendications précédentes, comprenant l'étape de procédé suivante:
- mémorisation de l'identificateur d'affichage d'une zone d'affichage (10) sélectionnée sur le bureau à l'aide d'un dispositif de pointage à la position hiérarchique la plus élevée dans la liste hiérarchique.

7. Procédé selon l'une des revendications précédentes, comprenant les étapes de procédé suivantes:
- disposition d'une zone d'affichage (4) à une position prédéterminée sur l'agencement (1),
- détermination de toutes les zones des autres zones d'affichage (2, 3) affichées sur le bureau, qui chevauchent la zone d'affichage (4) située à la position prédéterminée, et
- découpe de ces zones de chevauchement des autres zones d'affichage (2, 3), de sorte que la zone d'affichage (4) disposée à la position prédéterminée sur la topologie est entièrement visible.

8. Procédé selon l'une des revendications précédentes, comprenant les étapes de procédé supplémentaires suivantes:
- réception en continu de données afin de mettre à jour les affichages d'une zone d'affichage (4) affichée sur le bureau,
- mise à jour des affichages de la zone d'affichage (4) affichée sur le bureau sur la base des données reçues en continu, et
- réduction de taille ou masquage de la zone d'affichage (4) en réponse à une instruction de l'utilisateur, la réception en continu de données étant interrompue pour la zone d'affichage (4) réduite en taille ou masquée.

9. Procédé selon l'une des revendications précédentes, les zones d'affichage (2, 3, 4) étant utilisées pour afficher des instruments de données de mesure pour des données de mesure en temps réel dans des applications « matériel dans la boucle ».
